# EUROPEAN PATENT SPECIFICATION

(11) **EP 4 462 566 B1**
(45) Date of publication and mention of the grant of the patent: **11.02.2026**
(21) Application number: 23907295.2
(22) Date of filing: 12.09.2023
(51) Int. Cl.: H01M 50/244, B66F 3/02, H01M 50/262

(54) **BATTERY PACK LIFTING APPARATUS**
VORRICHTUNG ZUM HEBEN VON BATTERIEBLÖCKEN
APPAREIL DE LEVAGE DE BLOCS-BATTERIES

(30) Priority: 22.12.2022 KR 20220182079
(43) Date of publication of application: 13.11.2024
(73) Proprietor: LG Energy Solution, Ltd., Seoul 07335 (KR)
(72) Inventor: KIM, Hak Soon, Daejeon 34122 (KR); LEE, Jin Hyun, Daejeon 34122 (KR); HWANG, Jo Yeon, Daejeon 34122 (KR)
(74) Representative: Plasseraud IP
(86) International application number: PCT/KR2023/013612
(87) International publication number: WO 2024/136008

(56) References cited:
- CN-A- 104 724 572
- CN-A- 109 606 166
- JP-A- 2010 064 862
- KR-A- 20060 103 032
- KR-A- 20160 085 528
- KR-A- 20210 119 651
- KR-A- 20220 084 517
- KR-B1- 102 176 097
- KR-B1- 102 176 097

## Description

### [Technical Field]

This application claims the benefit of priority to Korean Patent Application No. 2022-0182079 filed on December 22, 2022.

The present invention relates to a battery pack lifting apparatus. More particularly, the present invention relates to a battery pack lifting apparatus using a magnetic damper capable of upwardly and downwardly moving a heavily loaded battery pack to a desired position by disposing a permanent magnet, an electromagnet, a rack and pinion, and a sliding rail in the apparatus in order to prevent damage to the battery pack that may occur when the battery pack is positioned or moved.

### [Background Art]

With rapid improvement in safety and capacity of a lithium secondary battery, which is capable of being charged and discharged, the types of devices that use the lithium secondary battery as an energy source have increased in number.

For example, the lithium secondary battery has been widely used as an energy source for wireless mobile devices, which are small multifunctional products, or wearable devices, which are worn on bodies, and has also been used as an energy source for electric vehicles and hybrid electric vehicles presented as alternatives to existing gasoline and diesel vehicles, which cause air pollution, or as a medium or large battery pack configured to be used in an energy storage system (ESS).

Depending on the shape of a battery case, the lithium secondary battery is classified as a cylindrical secondary battery having an electrode assembly mounted in a cylindrical metal can, a prismatic secondary battery having an electrode assembly mounted in a prismatic metal can, or a pouch-shaped secondary battery having an electrode assembly mounted in a pouch-shaped case made of an aluminum laminate sheet. Among such secondary batteries, the cylindrical secondary battery has the advantages of relatively large capacity and structural safety.

In order to realize such a high-power, highcapacity secondary battery, a battery pack is manufactured. A battery pack, such as a battery pack for vehicle driving, a PCM for an ESS, or a battery module unit pack, is large in size and heavy, and therefore the battery pack is generally transferred and positioned using an automated apparatus including a robot, etc.

For a battery pack weighing between 10 kg and 20 kg, which is used in an E-bike, an E-scooter, etc., it is common for the battery pack to be moved and positioned by a human operator on a semi-automated line. However, a battery pack having such a load may be subjected to an accident such as drop and collision, which may cause unforeseen damage to the battery pack, during a repeated assembly process.

There is a possibility that damage to a battery pack may occur during a positioning-in-jig or packaging process for product assembly in a product manufacturing process in a semi-finished state or in a battery pack state and during a positioning process by gravity when fastening or assembling a motorized set including a secondary battery.

Damage to the battery pack during the product manufacturing process is due to the fact that there is no cushioning material to cushion the product.

Korean Patent Application Publication No. 2020-0065729 discloses a battery pack transfer apparatus including a horizontal bar for rails disposed horizontally at a set height such that the transfer apparatus is movable in a state of being connected to the horizontal bar for rails, wherein the horizontal bar for rails is supported by at least one of a stationary vertical support, which is removably fixed to an upper end of a battery mounting rack, is vertically disposed, and is connected to one end of the horizontal bar for rails, and a general vertical support, which is located at the upper end of a battery mounting rack and is vertically disposed and to which a set portion of the horizontal bar for rails is connected. However, there is no disclosure of a battery pack lifting apparatus capable of positioning a heavily weighted battery pack at a desired place.

Korean Patent Application Publication No. 2015-0064378 discloses a battery pack replacement system for electric vehicles, the battery pack replacement system including a determination unit configured to determine the type of a battery pack of a vehicle, a replacement unit configured to remove a discharged battery pack from the vehicle or to mount a battery pack to the vehicle, a charging/discharging unit configured to charge/discharge the discharged battery pack and to store the battery pack, and a transportation unit configured to transport a discharged battery pack removed from the replacement unit to the charging/discharging unit or to transport a battery pack fully charged by the charging/discharging unit to the replacement unit. However, there is no disclosure of a battery pack lifting apparatus capable of positioning a heavily weighted battery pack at a desired place.

Korean Patent Application Publication No. 2021-0154038 discloses an ESS-type assembled battery pack including an enclosure, two or more battery cells, and a system including a cartridge configured to receive the battery cells and a lead jig, wherein the cartridge is configured to have a structure that can be opened and closed such that the battery cells can be attached to and detached from the cartridge, the lead jig has a structure that is removably attached to leads of the battery cells, whereby electrical connection between the battery cells is achieved without welding between the leads of the battery cells by placing the battery cells in the cartridge, stacking the same in a thickness direction, and mounting the lead jig to the leads of the battery cells. However, there is no disclosure of a battery pack lifting apparatus capable of positioning a heavily weighted battery pack at a desired place.

Korean Registered Patent Publication No. 1188628 discloses a battery cell moving apparatus including a carrier jig having a mounting recess formed in an inner surface thereof and a groove formed in an outer surface of one end thereof and a die constituted by an elastic pressing member configured to press the carrier jig and an elastic coupling member having a coupling recess corresponding to the groove in the carrier jig, wherein, when the carrier jig is pressed in a forward direction in the state in which the carrier jig is mounted between the elastic pressing member and the elastic coupling member of the die, the carrier jig is resiliently pressed by the elastic pressing member of the die and moves along the elastic coupling member at a groove-forming interval by one step, whereby predetermined operations are continuously performed on battery cells mounted on the carrier jig. However, there is no disclosure of a battery pack lifting apparatus capable of positioning a heavily weighted battery pack at a desired place.

Consequently, a battery pack lifting apparatus using a magnetic damper capable of upwardly and downwardly moving a heavily loaded battery pack to a desired position by disposing a permanent magnet, an electromagnet, a rack and pinion, and a sliding rail in the apparatus in order to prevent damage to the battery pack that may occur when the battery pack is positioned or moved has not yet been proposed.

### (Prior Art Documents)

Korean Patent Application Publication No. 2020-0065729
Korean Patent Application Publication No. 2015-0064378
Korean Patent Application Publication No. 2021-0154038

Korean Registered Patent Publication No. 1188628 CN109606166A discloses a charging pile of new energy electric automobile. KR102176097B1 discloses an energy storage system with colling apparatus. JP2010064862A discloses an electromagnetic shock absorber for elevator. CN104724572A discloses an anti-fall magnetic automatic decelerating device for lift car.

### [Disclosure]

### [Technical Problem]

The present invention has been made in view of the above problems, and it is an object of the present invention to provide a battery pack lifting apparatus using a magnetic damper capable of upwardly and downwardly moving a heavily loaded battery pack to a desired position by disposing a permanent magnet, an electromagnet, a rack and pinion, and a sliding rail in the apparatus in order to prevent damage to the battery pack that may occur when the battery pack is positioned or moved.

### [Technical Solution]

A battery pack lifting apparatus according to the present invention to accomplish the above object includes a housing (100), an upper jig (200) configured to allow a battery pack (10) to be mounted thereon, a vertical jig (300) extending vertically and configured to connect to each of opposite sides of the upper jig, and a lower jig (400) disposed to face the upper jig (200), each of opposite sides of the lower jig being connected to a corresponding side of the vertical jig (300), wherein intensity of a magnetic field between the upper jig (200) and the lower jig (400) is adjusted to move the battery pack upward and downward, wherein a permanent magnet (270) is disposed at one surface of the upper jig and an electromagnet (410) is disposed at one surface of the lower jig, or a permanent magnet (270) is disposed at one surface of the lower jig and an electromagnet (410) is disposed at one surface of the upper jig.

Magnetic repulsion and attraction between the upper jig (200) and the lower jig (400) may be adjusted to control upward and downward movement of the upper jig.

A plurality of rollers (210) configured to move along a wall of the vertical jig may be disposed on a first surface of the upper jig (200).

A pinion (220) may be formed at one of opposite ends of the upper jig (200), and a rack (310) may be formed at a position of a first surface of the vertical jig corresponding to the pinion.

The upper jig (200) may include an upper jig removal unit (280) configured to separate the pinion (220) from the rack (310) and configured to separate the plurality of rollers (210) from the wall of the vertical jig (300) when spaced apart from the lower jig (400) by a predetermined distance.

When the upper jig (200) is separated from the vertical jig (300) by the upper jig removal unit (280), a first slide convex portion (230) disposed on each of the opposite ends of the upper jig (200) may protrude out of each end of the opposite ends of the upper jig.

The upper jig (200) separated from the vertical jig (300) by the upper jig removal unit (280) may be moved forward and backward in the state in which the first slide convex portion (230) is coupled to any one of a plurality of first slide concave portions (320) disposed in the vertical jig (300), wherein the lower jig may be moved forward and backward in the state in which a second slide convex portion (420) disposed on each of opposite ends of the lower jig is coupled to a second slide concave portion (330) disposed in the vertical jig (300), and wherein the battery pack (10) may be located at a predetermined position.

The upper jig (200) may be provided at an upper surface with a receiving portion (240) having a cushion (250) configured to allow the battery pack (10) to be positioned thereon, and each edge of the receiving portion (240) and the battery pack (10) may be coupled to each other by fitting.

The battery pack lifting apparatus may further include a spring (260) coupled to an upper part or a lower part of the receiving portion (240), the spring being configured to connect the receiving portions to each other and to absorb vibration applied to the battery pack from an outside of the battery pack lifting apparatus, wherein the receiving portion (240) may be provided with a receiving recess (241) having a quadrangular plate shape and a predetermined depth for coupling with an outer surface of the battery pack by fitting, and wherein a receiving plate (242), from which the cushion (250) protrudes downward, is provided at a lower surface of the receiving portion, and a stopper (243) removably coupled to the receiving plate (242) and configured to prevent separation of the battery pack coupled to the receiving recess (241) may be provided at the lower surface of the receiving portion.

In addition, the present invention may provide various combinations of the above solving means.

### [Advantageous Effects]

As is apparent from the above description, a battery pack lifting apparatus according to the present invention has the effect of stably moving a battery pack upward and downward using attraction and repulsion between a permanent magnet and an electromagnet.

In addition, it is possible to provide a weight cushioning effect to a conventional battery pack assembly process or a process of assembling a driving device including a battery pack.

In addition, the battery pack lifting apparatus according to the present invention has the effect of reducing mechanical damage without a suspension device in an apparatus for positioning or moving a battery pack including a magnetic damper jig.

### [Description of Drawings]

FIG. 1 is a view showing the configuration of a battery pack lifting apparatus including a magnetic damper.
FIG. 2 is a view showing the configuration of a rack and pinion of the battery pack lifting apparatus according to an embodiment of the present invention.
FIG. 3 is a view showing the configuration of a sliding mechanism of the battery pack lifting apparatus according to an embodiment of the present invention.
FIG. 4 is a view showing the configuration of a battery pack receiving portion according to an embodiment of the present invention.
FIG. 5 is a view showing the configuration of a rack and pinion formed at a vertical jig according to an embodiment of the present invention.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

In addition, a description to embody elements through limitation or addition may be applied to all inventions, unless particularly restricted, and does not limit a specific invention.

Also, in the description of the invention and the claims of the present application, singular forms are intended to include plural forms unless mentioned otherwise.

Also, in the description of the invention and the claims of the present application, "or" includes "and" unless mentioned otherwise. Therefore, "including A or B" means three cases, namely, the case including A, the case including B, and the case including A and B.

Hereinafter, an embodiment of the present invention will be described in detail with reference to the drawings.

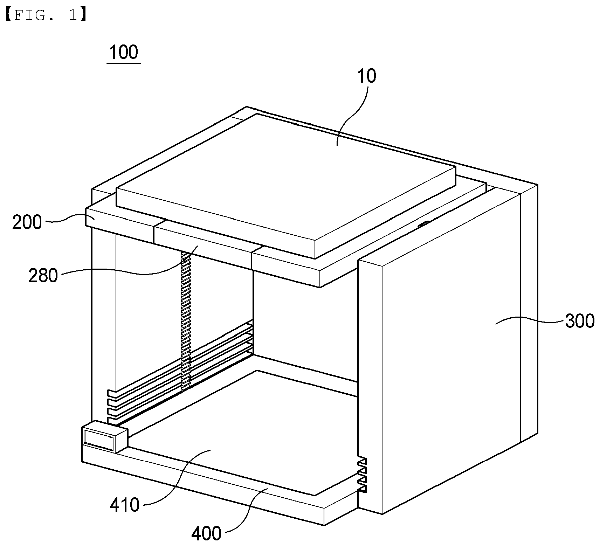

FIG. 1 is a view showing the configuration of a battery pack lifting apparatus including a magnetic damper.

The battery pack lifting apparatus may include a housing 100, an upper jig 200 configured to allow a battery pack 10 to be mounted thereon, a vertical jig 300 connected to each of opposite sides of the upper jig 200, the vertical jig extending vertically, and a lower jig 400 formed so as to face the upper jig 200, each of opposite sides of the lower jig being connected to one side of a corresponding one of the vertical jigs 300, wherein the intensity of a magnetic field between the upper jig 200 and the lower jig 400 is adjusted to move the battery pack upward and downward.

A permanent magnet, as a lifting means, may be formed at a lower part of a main body of the upper jig configured to be moved along a base plate of the upper jig by a moving force generation means configured to move the upper jig upward and downward.

An electromagnet, as a lifting means, configured to move the battery pack upward and downward by magnetic repulsion relative to the upper jig may be formed at an upper part of a main body of the lower jig.

When the electromagnet is driven under control of a controller, the electromagnet generates a magnetic force line having a pole (e.g., N pole) opposite the pole (e.g., S pole) of a magnetic force line generated by the permanent magnet, whereby the battery pack is moved upward by repulsion between the magnetic force lines generated by the permanent magnet and the electromagnet, and when driving of the electromagnet is interrupted under control of the controller after a predetermined time, the battery pack moves downward due to gravity.

The battery pack, located at an upper part of the upper jig in a stationary state after being mounted on the upper jig, may be repeatedly moved upward to a predetermined height and moved downward by a predetermined height by repulsion between the permanent magnet and the electromagnet.

The electromagnet 410 is formed at one surface of any one of the upper jig 200 and the lower jig 400.

Magnetic repulsion and attraction between the upper jig 200 and the lower jig 400 may be adjusted to control upward and downward movement of the upper jig.

Preferably, the electromagnet formed at the lower jig have a control program installed therein, and is configured to be selectively driven for a predetermined time according to an output signal of the controller that determines the position of the upper jig from a movement position detection means. When the upper jig is moved by a predetermined distance, the driving of the upper jig is stopped, and when a driving signal is generated again by the controller, the electromagnet is driven again for a predetermined time, whereby the upper jig is moved upward, is moved downward, or is moved upward by a predetermined height and is then moved downward.

A plurality of rollers 210 configured to move along walls of the vertical jigs may be formed on a first surface of the upper jig 200.

The first surface of the upper jig is the surface opposite the surface of the upper jig on which the battery pack is located. Preferably, the first surface of the upper jig is the surface of the upper jig at which the permanent magnet is formed.

The plurality of rollers is formed at opposite side ends of the first surface. The rollers may abut on the walls of the vertical jigs, and may move inwardly of the first surface in a state of being spaced apart from the walls of the vertical jigs by a predetermined distance.

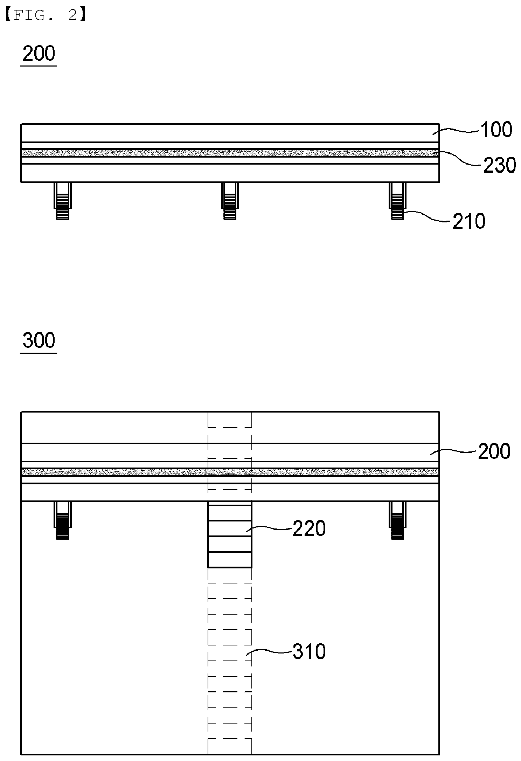

FIG. 2 is a view showing the configuration of a rack and pinion of the battery pack lifting apparatus according to an embodiment of the present invention.

A pinion 220 may be formed at one of opposite ends of the upper jig 200, and a rack 310 may be formed at the position of a first surface of the vertical jig corresponding to the pinion.

As a result, the upper jig may be moved along the wall of the vertical jig, and a rack and pinion type driving unit is located on the upper jig, a description of which will follow.

The vertical jig may have various shapes, for example, a quadrangular sectional shape or a circular sectional shape.

When a vertical jig having a quadrangular sectional shape is used, the rollers of the upper jig may move along the vertical jig. When a vertical jig having a circular sectional shape is used, on the other hand, a roller rail may be provided along the vertical jig so as to extend upward and downward in order to secure a stable roller support surface, and the rollers of the upper jig may move upward and downward along the roller rail.

The driving unit configured to move the upper jig having the battery pack mounted thereto may be constituted by the moving force generation means configured to drive the permanent magnet formed at the upper jig and the electromagnet formed at the lower jig, which is a power source, and the rack and pinion, which is an actuator of the upper jig.

Upward and downward driving is performed by the pinion, which is formed at one end of the upper jig, and the rack, which is formed at the vertical jig so as correspond to the pinion, and the rollers are driven as an auxiliary support for upward and downward movement.

The pinion is fixedly installed on the upper jig at one end of the upper jig, and the rack formed on the vertical jig is engaged with the pinion.

When the moving force generation means configured to generate magnetic repulsion is operated, the pinion is moved along the rack, whereby the upper jig may be moved upward and downward.

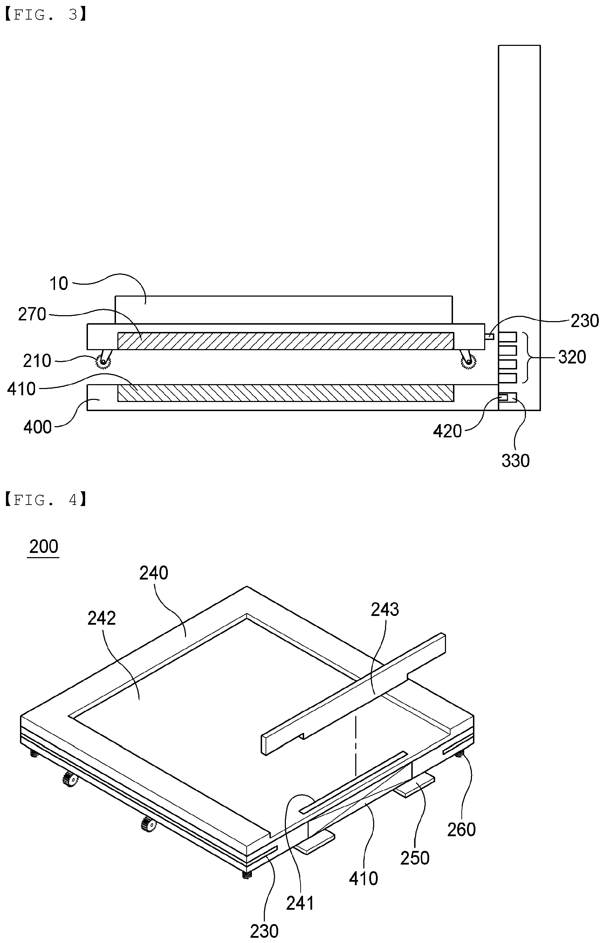

FIG. 3 is a view showing the configuration of a sliding mechanism of the battery pack lifting apparatus according to an embodiment of the present invention.

The upper jig 200 may include an upper jig removal unit 280 configured to separate the pinion 220 from the rack 310 and to separate the rollers 210 from the wall of the vertical jig 300 when spaced apart from the lower jig 400 by a predetermined distance.

The upper jig removal unit and the electromagnet may be formed at the upper jig.

When the upper jig 200 is separated from the vertical jig 300 by the upper jig removal unit 280, a first slide convex portion 230 formed on each of opposite ends of the upper jig 200 may protrude.

The upper jig 200 separated from the vertical jig 300 by the upper jig removal unit 280 may be moved forward and backward in the state in which the first slide convex portion 230 is coupled to any one of a plurality of first slide concave portions 320 formed in the vertical jig 300, and the lower jig may be moved forward and backward in the state in which a second slide convex portion 420 formed on each of opposite ends of the lower jig is coupled to a second slide concave portion 330 formed in the vertical jig 300, whereby the battery pack 10 may be located at a predetermined position.

FIG. 4 is a view showing the configuration of a battery pack receiving portion according to an embodiment of the present invention.

The upper jig 200 may be provided at an upper surface with a receiving portion 240 having a cushion 250 configured to allow the battery pack 10 to be positioned thereon, and each edge of the receiving portion 240 and the battery pack 10 may be coupled to each other by fitting.

A spring 260 coupled to an upper part and a lower part of the receiving portion 240 to connect the receiving portions to each other and to absorb vibration applied to the battery pack from the outside may be further included, the receiving portion 240 may be provided with a receiving recess 241 having a quadrangular plate shape and a predetermined depth for coupling with the outer surface of the battery pack by fitting, and a receiving plate 242, from which the cushion 250 protrudes downward, and a stopper 243 removably coupled to the receiving plate 242 in order to prevent separation of the battery pack coupled to the receiving recess 241 may be provided at a lower surface of the receiving portion.

A positioning member having an absorbing member configured to allow the battery pack to be positioned thereon may be formed at the upper surface of the upper jig, and each corner of the positioning member and the battery pack may be coupled to each other by fitting.

A buffer member coupled to an upper part or a lower part of the positioning member to connect the positioning members to each other and to absorb vibration applied to the battery pack from the outside may be further included, the positioning member may be provided with a positioning recess having a quadrangular plate shape and a predetermined depth for coupling with the outer surface of the battery pack by fitting, and an installation plate, from which the absorbing member protrudes downward, and a separation preventing piece removably coupled to the installation plate in order to prevent separation of the battery pack coupled to the positioning recess may be provided at a lower surface of the positioning member.

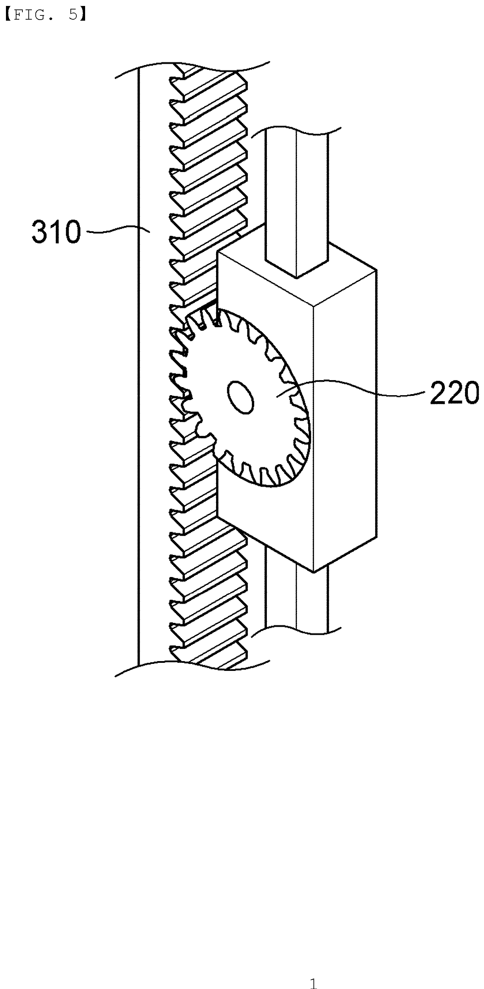

FIG. 5 is a view showing the configuration of a rack and pinion formed at a vertical jig according to an embodiment of the present invention.

Those skilled in the art to which the present invention pertains will appreciate that various applications and modifications are possible within the category of the present invention based on the above description.

### (Description of Reference Numerals)

10: Batter pack
100: Housing
200: Upper jig
210: Roller
220: Pinion
230: First slide convex portion
240: Receiving portion
241: Receiving recess
242: Receiving plate
243: Stopper
250: Cushion
260: Spring
270: Permanent magnet
280: Upper jig removal unit
300: Vertical jig
310: Rack
320: First slide concave portion
330: Second slide concave portion
400: Lower jig
410: Electromagnet
420: Second slide convex portion

## Claims

1. A battery pack lifting apparatus comprising:
a housing (100);
an upper jig (200) configured to allow a battery pack (10) to be mounted thereon;
a vertical jig (300) extending vertically and configured to connect to each of opposite sides of the upper jig; and
a lower jig (400) disposed to face the upper jig, each of opposite sides of the lower jig being connected to a corresponding side of the vertical jig,
**characterized in that** the intensity of a magnetic field between the upper jig and the lower jig which is generated by a permanent magnet (270) and an electromagnet (410) is adjusted to move the battery pack upward and downward,
wherein the permanent magnet (270) is disposed at one surface of the upper jig and the electromagnet (410) is disposed at one surface of the lower jig, or
the permanent magnet (270) is disposed at one surface of the lower jig and the electromagnet (410) is disposed at one surface of the upper jig.

2. The battery pack lifting apparatus according to claim 1, wherein magnetic repulsion and attraction between the upper jig and the lower jig are adjusted to control upward and downward movement of the upper jig.

3. The battery pack lifting apparatus according to claim 1, wherein a plurality of rollers (210) configured to move along a wall of the vertical jig are disposed on a first surface of the upper jig.

4. The battery pack lifting apparatus according to claim 3,
wherein a pinion (220) is formed at one of opposite ends of the upper jig, and
wherein a rack (310) is formed at a position of a first surface of the vertical jig corresponding to the pinion.

5. The battery pack lifting apparatus according to claim 4, wherein the upper jig comprises an upper jig removal unit (280) configured to separate the pinion from the rack and configured to separate the plurality of rollers from the wall of the vertical jig when spaced apart from the lower jig by a predetermined distance.

6. The battery pack lifting apparatus according to claim 5, wherein, when the upper jig is separated from the vertical jig by the upper jig removal unit, a first slide convex portion disposed on each of the opposite ends of the upper jig protrudes out of each end of the opposite ends of the upper jig.

7. The battery pack lifting apparatus according to claim 6,
wherein the upper jig separated from the vertical jig by the upper jig removal unit is moved forward and backward in a state in which the first slide convex portion (230) is coupled to any one of a plurality of first slide concave portions (320) disposed in the vertical jig,
wherein the lower jig is moved forward and backward in a state in which a second slide convex portion (420) disposed on each of opposite ends of the lower jig is coupled to a second slide concave portion (330) disposed in the vertical jig, and
wherein the battery pack is located at a predetermined position.

8. The battery pack lifting apparatus according to claim 1,
wherein the upper jig is provided at an upper surface with a receiving portion (240) having a cushion (250) configured to allow the battery pack to be positioned thereon, and
wherein each edge of the receiving portion and the battery pack are coupled to each other by fitting.

9. The battery pack lifting apparatus according to claim 8, further comprising:
a spring (260) coupled to an upper part or a lower part of the receiving portion, the spring being configured to connect the receiving portions to each other and to absorb vibration applied to the battery pack from an outside of the battery pack lifting apparatus,
wherein the receiving portion is provided with a receiving recess (241) having a quadrangular plate shape and a predetermined depth for coupling with an outer surface of the battery pack by fitting, and
wherein a receiving plate (242), from which the cushion protrudes downward, is provided at a lower surface of the receiving portion, and a stopper (243) removably coupled to the receiving plate and configured to prevent separation of the battery pack coupled to the receiving recess is provided at the lower surface of the receiving portion.

## Patentansprüche

1. Batteriepack-Hebevorrichtung, umfassend:
ein Gehäuse (100);
eine obere Halterung (200), welche dazu eingerichtet ist, einem Batteriepack (10) zu ermöglichen, darauf angebracht zu sein;
eine vertikale Halterung (300), welche sich vertikal erstreckt und dazu eingerichtet ist, sich mit jeder von entgegengesetzten Seiten der oberen Halterung zu verbinden; und
eine untere Halterung (400), welche derart angeordnet ist, dass sie der oberen Halterung zugewandt ist, wobei jede von entgegengesetzten Seiten der unteren Halterung mit einer entsprechenden Seite der vertikalen Halterung verbunden ist,
**dadurch gekennzeichnet, dass** die Intensität eines magnetischen Felds zwischen der oberen Halterung und der unteren Halterung, welches durch einen Permanentmagneten (270) und einen Elektromagneten (410) generiert ist, angepasst wird, um den Batteriepack nach oben und nach unten zu bewegen,
wobei der Permanentmagnet (270) an einer Fläche der oberen Halterung angeordnet ist und der Elektromagnet (410) an einer Fläche der unteren Halterung angeordnet ist, oder
der Permanentmagnet (270) an einer Fläche der unteren Halterung angeordnet ist und der Elektromagnet (410) an einer Fläche der oberen Halterung angeordnet ist.

2. Batteriepack-Hebevorrichtung nach Anspruch 1, wobei eine magnetische Abstoßung und Anziehung zwischen der oberen Halterung und der unteren Halterung angepasst wird, um eine Aufwärts- und Abwärtsbewegung der oberen Halterung zu steuern.

3. Batteriepack-Hebevorrichtung nach Anspruch 1, wobei eine Mehrzahl von Rollen (210), welche dazu eingerichtet sind, sich entlang einer Wand der vertikalen Halterung zu bewegen, an einer ersten Fläche der oberen Halterung angeordnet ist.

4. Batteriepack-Hebevorrichtung nach Anspruch 3,
wobei ein Ritzel (220) an einer von entgegengesetzten Enden der oberen Halterung gebildet ist, und
wobei eine Zahnstange (310) an einer Position einer ersten Fläche der vertikalen Halterung gebildet ist, welche dem Ritzel entspricht.

5. Batteriepack-Hebevorrichtung nach Anspruch 4, wobei die obere Halterung eine Obere-Halterung-Entfernungseinheit (280) umfasst, welche dazu eingerichtet ist, das Ritzel von der Zahnstange zu separieren, und dazu eingerichtet ist, die Mehrzahl von Rollen von der Wand der vertikalen Halterung zu separieren, wenn diese durch einen vorbestimmten Abstand von der unteren Halterung beabstandet ist.

6. Batteriepack-Hebevorrichtung nach Anspruch 5, wobei, wenn die obere Halterung durch die Obere-Halterung-Entfernungseinheit von der vertikalen Halterung separiert ist, ein erster Schiebe-Konvex-Abschnitt an jedem der entgegengesetzten Enden der oberen Halterung aus jedem Ende der entgegengesetzten Enden der oberen Halterung vorsteht.

7. Batteriepack-Hebevorrichtung nach Anspruch 6,
wobei die obere Halterung, welche durch die Obere-Halterung-Entfernungseinheit von der vertikalen Halterung separiert ist, in einem Zustand, in welchem der erste Schiebe-Konvex-Abschnitt (230) mit einem aus einer Mehrzahl von ersten Schiebe-Konkav-Abschnitten (320) gekoppelt ist, welche in der vertikalen Halterung angeordnet sind, nach vorne und hinten bewegt wird,
wobei die untere Halterung in einem Zustand, in welchem ein zweiter Schiebe-Konvex-Abschnitt (420), welcher an jedem von entgegengesetzten Enden der unteren Halterung angeordnet ist, mit einem zweiten Schiebe-Konkav-Abschnitt (330) gekoppelt ist, welcher in der vertikalen Halterung angeordnet ist, nach vorne und hinten bewegt wird, und
wobei sich der Batteriepack an einer vorbestimmten Position befindet.

8. Batteriepack-Hebevorrichtung nach Anspruch 1, wobei die obere Halterung an einer oberen Fläche mit einem Aufnahmeabschnitt (240) bereitgestellt ist, welcher einen Dämpfer (250) aufweist, welcher dazu eingerichtet ist, dem Batteriepack zu ermöglichen, darauf positioniert zu sein, und
wobei jeder Rand des Aufnahmeabschnitts und des Batteriepacks durch Einpassen miteinander gekoppelt sind.

9. Batteriepack-Hebevorrichtung nach Anspruch 8, ferner umfassend:
eine Feder (260), welche mit einem oberen Teil oder einem unteren Teil des Aufnahmeabschnitts gekoppelt ist, wobei die Feder dazu eingerichtet ist, die Aufnahmeabschnitte miteinander zu verbinden, und eine Vibration zu absorbieren, welche auf den Batteriepack von einem Äußeren der Batteriepack-Hebevorrichtung angewendet wird,
wobei der Aufnahmeabschnitt mit einer Aufnahmeausnehmung (241) bereitgestellt ist, welche eine viereckige Plattenform und eine vorbestimmte Tiefe zum Koppeln mit einer äußeren Fläche des Batteriepacks durch Einpassen aufweist, und
wobei eine Aufnahmeplatte (242), von welcher der Dämpfer nach unten vorsteht, an einer unteren Fläche des Aufnahmeabschnitts bereitgestellt ist, und ein Stopper (243), welcher entfernbar mit der Aufnahmeplatte gekoppelt ist, und dazu eingerichtet ist, eine Separierung des Batteriepacks, welcher mit der Aufnahmeaussparung gekoppelt ist, zu verhindern, an der unteren Fläche des Aufnahmeabschnitts bereitgestellt ist.

## Revendications

1. Appareil de levage de bloc-batterie comprenant :
un boîtier (100) ;
un gabarit supérieur (200) configuré pour permettre à un bloc-batterie (10) d'être monté sur celui-ci ;
un gabarit vertical (300) s'étendant verticalement et configuré pour se connecter à chacun de côtés opposés du gabarit supérieur ; et
un gabarit inférieur (400) disposé en regard du gabarit supérieur, chacun de côtés opposés du gabarit inférieur étant connecté à un côté correspondant du gabarit vertical, **caractérisé en ce que** l'intensité d'un champ magnétique entre le gabarit supérieur et le gabarit inférieur, qui est généré par un aimant permanent (270) et un électroaimant (410), est ajustée pour déplacer le bloc-batterie vers le haut et vers le bas,
dans lequel l'aimant permanent (270) est disposé sur une surface du gabarit supérieur et l'électroaimant (410) est disposé sur une surface du gabarit inférieur, ou l'aimant permanent (270) est disposé sur une surface du gabarit inférieur et l'électroaimant (410) est disposé sur une surface du gabarit supérieur.

2. Appareil de levage de bloc-batterie selon la revendication 1, dans lequel une répulsion et une attraction magnétiques entre le gabarit supérieur et le gabarit inférieur sont ajustées pour commander un mouvement vers le haut et vers le bas du gabarit supérieur.

3. Appareil de levage de bloc-batterie selon la revendication 1, dans lequel une pluralité de rouleaux (210) configurés pour se déplacer le long d'une paroi du gabarit vertical sont disposés sur une première surface du gabarit supérieur.

4. Appareil de levage de bloc-batterie selon la revendication 3,
dans lequel un pignon (220) est formé à l'une des extrémités opposées du gabarit supérieur, et
dans lequel une crémaillère (310) est formée à une position d'une première surface du gabarit vertical correspondant au pignon.

5. Appareil de levage de bloc-batterie selon la revendication 4, dans lequel le gabarit supérieur comprend une unité de retrait de gabarit supérieur (280) configurée pour séparer le pignon de la crémaillère et configurée pour séparer la pluralité de rouleaux de la paroi du gabarit vertical lorsqu'ils sont espacés du gabarit inférieur d'une distance prédéterminée.

6. Appareil de levage de bloc-batterie selon la revendication 5, dans lequel, lorsque le gabarit supérieur est séparé du gabarit vertical par l'unité de retrait de gabarit supérieur, une première portion convexe de glissement disposée sur chacune des extrémités opposées du gabarit supérieur fait saillie depuis chaque extrémité des extrémités opposées du gabarit supérieur.

7. Appareil de levage de bloc-batterie selon la revendication 6,
dans lequel le gabarit supérieur, séparé du gabarit vertical par l'unité de retrait de gabarit supérieur, est déplacé vers l'avant et vers l'arrière dans un état où la première portion convexe de coulissement (230) est couplée à l'une quelconque d'une pluralité de premières portions concaves de coulissement (320) disposées dans le gabarit vertical,
dans lequel le gabarit inférieur est déplacé vers l'avant et vers l'arrière dans un état dans lequel une seconde portion convexe de coulissement (420) disposée sur chacune des extrémités opposées du gabarit inférieur est couplée à une seconde portion concave de coulissement (330) disposée dans le gabarit vertical, et
dans lequel le bloc-batterie est placé à une position prédéterminée.

8. Appareil de levage de bloc-batterie selon la revendication 1,
dans lequel le gabarit supérieur est agencé au niveau d'une surface supérieure avec une portion de réception (240) ayant un coussin (250) configuré pour permettre le positionnement du bloc-batterie sur celui-ci, et
dans lequel chaque bord de la portion de réception et le bloc-batterie sont couplés l'un à l'autre par ajustement.

9. Appareil de levage de bloc-batterie selon la revendication 8, comprenant en outre :
un ressort (260) couplé à une partie supérieure ou à une partie inférieure de la portion de réception, le ressort étant configuré pour connecter les portions de réception entre elles et pour absorber des vibrations appliquées au bloc-batterie depuis un extérieur de l'appareil de levage de bloc-batterie,
dans lequel la portion de réception est dotée d'un évidement de réception (241) ayant une forme de plaque quadrangulaire et une profondeur prédéterminée pour se coupler à une surface extérieure du bloc-batterie par ajustement, et
dans lequel une plaque de réception (242), à partir de laquelle le coussin fait saillie vers le bas, est agencée au niveau d'une surface inférieure de la portion de réception, et une butée (243) couplée de manière amovible à la plaque de réception et configurée pour empêcher une séparation du bloc-batterie couplé à l'évidement de réception est agencée au niveau de la surface inférieure de la portion de réception.
